# EUROPÄISCHE PATENTSCHRIFT

(11) **EP 3 954 837 B1**
(45) Veröffentlichungstag und Bekanntmachung des Hinweises auf die Patenterteilung: **28.01.2026**
(21) Anmeldenummer: 21180862.1
(22) Anmeldetag: 22.06.2021
(51) Int. Cl.: E03C 1/182, B29C 39/00, C04B 26/06, C08F 265/06, C08K 3/04

(54) **GIESSKÖRPER IN FORM EINER SPÜLE**
CASTING IN THE SHAPE OF A SINK
CORPS COULÉ EN FORME D'ÉVIER

(30) Priorität: 22.07.2020 DE 102020119385
(43) Veröffentlichungstag der Anmeldung: 16.02.2022
(73) Patentinhaber: Schock GmbH, 94209 Regen (DE)
(72) Erfinder: Probst, Alois, 94209 Regen (DE)
(74) Vertreter: Lindner Blaumeier Patent- und Rechtsanwälte

(56) Entgegenhaltungen:
- EP-A1- 2 681 367
- DE-A1- 102004 055 365
- US-A1- 2018 187 400
- US-S- D 353 652

## Beschreibung

Die Erfindung betrifft einen Gießkörper in Form einer Spüle gemäß Anspruch 1, u. a. umfassend ein Becken mit einem Boden, einer Rückwand, einer Vorderwand und zwei diese verbindenden Seitenwänden, sowie einem sich zur Seite des Beckens erstreckendem, umlaufenden Rand bestehend aus sich von Seitenkanten der Rückwand, der Seitenwände und der Vorderwand geradlinig erstreckenden, ebenen Randabschnitten, wobei die Spüle aus einem Kompositwerkstoff mit einem ausgehärteten polymeren Bindemittel und darin eingelagerten Füllstoffpartikeln besteht.

Derartige gegossene und aus einem Kompositwerkstoff bestehende Spülen erfreuen sich zunehmender Beliebtheit. Da sie aus einem Kompositwerkstoff mit einem ausgehärteten polymeren Bindemittel und darin eingelagerten Füllstoffpartikeln bestehen, weisen sie zum einen hervorragende mechanische Eigenschaften auf, zum anderen ist eine große Bandbreite hinsichtlich der Farbgebung respektive Oberflächenstrukturierung gegeben, da die Basis für eine solche Spüle eine Gießmasse auf einer Polymerbasis mit eingebrachten Füllstoffpartikeln ist.

Eine solche Spüle umfasst in bekannter Weise ein Becken mit einem Boden, einer Rückwand, einer Vorderwand und zwei Seitenwänden. Vorgesehen ist weiterhin ein umlaufender Rand, der sich von den Seitenkanten der Rückwand, der Vorderwand und der Seitenwände wegerstreckt. Dieser Seitenrand dient als Auflage im Rahmen der Spülenmontage, wobei die Spüle mit ihrem Rand von oben auf einen Unterschrank aufgesetzt wird, der vorher ca. 8 mm tief im Bereich der Auflagefläche abgefräst wird. Eine Arbeitsplatte wird anschließend von oben auf den Unterschrank und den Rand der Spüle aufgesetzt. Solche Spülen entsprechend dem Oberbegriff von Anspruch 1 sind aus der EP 2 681 367 sowie der US D 353 652 bekannt.

Der Erfindung liegt das Problem zugrunde, einen demgegenüber verbesserten Gießkörper in Form einer Spüle anzugeben.

Zur Lösung des Problems ist bei dem Gießkörper in Form einer Spüle der eingangs genannten Art erfindungsgemäß vorgesehen, dass sich zumindest an den Randabschnitt der Vorderwand eine diese zumindest abschnittsweise in ihrer Höhe übergreifende Schürze anschließt, die sich mit ihrer Außenseite rechtwinklig von der Außenseite des Randabschnitts und geradlinig bis zu ihrem Ende erstreckt.

Der erfindungsgemäße Gieß- respektive Spülenkörper zeichnet sich durch eine integral am Vorderwandrand anschließend angeformte Schürze aus, die, die Vorderwand in ihrer Höhe zumindest abschnittsweise übergreifend respektive abdeckend, vom Rand nach unten läuft. Die in der Montagestellung sichtbare Außenseite der Schürze verläuft dabei rechtwinklig zur sichtbaren Außenseite des vorderwandseitigen Randabschnitts, d. h., dass, nachdem dieser in der Montagestellung horizontal verläuft, demzufolge die Schürzenaußenseite vertikal verläuft. In der Montagestellung bildet demzufolge die Schürze den vorderen Sichtabschluss der Spüle und verkleidet letztlich die montierte Spüle in ihrer Anordnung beispielsweise an der Arbeitsplatte oder insbesondere einem entsprechenden Unterbaumöbel oder dergleichen. In der Montagestellung liegt demzufolge die Spüle mit den Randabschnitten, die an die Seitenwände anschließen, auf entsprechenden Stirnkanten der Seitenwände des Unterbaumöbels auf, während auf den an die Rückwand und die beiden Seitenwände anschließenden Randabschnittendie Arbeitsplatte flächig aufliegt. Der Rand an der Rückwand wird mit Unterbauklammern an der Arbeitsplatte befestigt, was für eine äußerst stabile und feste Montage völlig ausreichend ist. Der an die Vorderwand anschließende Randabschnitt erstreckt sich letztlich bis zur Vorderkante der Arbeitsplatte oder des Unterbaumöbels, oder gegebenenfalls auch etwas darüber hinaus, wo der Randabschnitt sodann in die vertikal nach unten laufende Schürze übergeht, die die vordere Sichtblende bildet und beispielsweise eine Verblendung bis zu einer unterhalb vorgesehenen Tür oder Ähnliches im Unterbaumöbel bildet. Damit bietet die erfindungsgemäße Spüle eine deutlich verbesserte Einbaumöglichkeit, da sie näher zur Vorderkante der Arbeitsplatte oder des Unterbaumöbels gesetzt werden kann respektive das Becken weiter nach vorne gezogen werden kann, da der vorderkantenseitige Randabschnitt nicht mit einem entsprechenden arbeitsplatten- oder unterbaumöbelseitigen Tragabschnitt unterfangen werden muss. Gleichzeitig bietet die integral angeformte Schürze einen sehr ansprechenden Sichtschutz respektive eine Blende, die eine optisch ansprechende Integration der Spüle ermöglicht. Dem trägt insbesondere der Umstand bei, dass die Schürzenaußenseite rechtwinklig zur Außenseite des Randabschnitts verläuft, sodass sich spülenseitig entsprechende Oberflächen ergeben, die parallel zu benachbarten Flächen seitens des Unterbaumöbels oder der Arbeitsplatte verlaufen. Auch der Umstand, dass die Spüle aus einem Kompositwerkstoff mit einer Polymermatrix und eingebetteten Füllstoffen besteht, was eine sehr große Variationsbreite hinsichtlich insbesondere der Farbgebung über die Füllstoffpartikel wie auch die Oberflächenstruktur bietet, und da die Außenfläche der Schürze in der Montagestellung sichtbar ist, ermöglicht eine optisch sehr effektvolle Integration bzw. ein ansprechendes Design.

Auch eine andere Einbauvariante ist denkbar. Hierbei wird die Spüle auf einen tieferen Unterschrank aufgesetzt und die Arbeitsplatten enden an in diesem Fall vorgesehenen, kurzen seitlichen Wandabschnitten, die an die seitlichen Randabschnitte anschließen und vorne in die Schürze übergehen. Die Arbeitsplatte ist dann auf Stoß an diese kurzen Wandabschnitte angesetzt. Auch hier verkleidet die Schürze den Übergang zum Unterbaumöbel.

Besonders zweckmäßig ist es, wenn die Schürze aus einem sich entlang der Vorderwand erstreckenden mittleren Schürzenabschnitt und zwei gerundet zu den Randabschnitten der Seitenwände übergehenden, an deren Seitenkanten anschließenden und rechtwinklig zu diesen Randabschnitten stehenden Schürzenabschnitten besteht. Gemäß dieser Weiterbildung ist die Schürze nicht nur entlang der Seitenkante der Vorderwand verlaufend vorgesehen, sondern zieht sich mit kurzem Schürzenabschnitten auch um das Eck der Spüle bzw. des Beckenrands herum und bindet an die Seitenkanten der Randabschnitte der Seitenwände an. Der Übergang ist gerundet, so dass sich an der Schürzenaußenseite im Eckbereich ein Radius ergibt, der beispielsweise im Bereich zwischen 0,5 - 2 cm beträgt. Auch die Außenseiten dieser gerundeten Schürzenabschnitte verlaufen wiederum rechtwinklig zu den Außenseiten der oberen Randabschnitte, sodass sich letztlich diese vertikale Geometrie im gesamten Schürzenbereich gegeben ist. Die ums Eck gezogenen Schürzenabschnitte ermöglichen es, wenn sich der vorderwandseitige Randabschnitt etwas über die Vorderkante des Unterbaumöbels oder der Arbeitsplatte hinaus erstreckt, einen etwaigen sich zwischen der Schürze und dem Unterbaumöbel ergebenden Spalt zu verschließen, also über die Schürzenabschnitte abzudecken, sodass demzufolge die Schürze nicht nur von vorne verblendet, sondern auch von der Seite. Ferner liegen die vertikalen Seitenkanten der Schürzenabschnitte an den vertikalen Flächen insbesondere des Unterbaumöbels an und stützen die Schürze gegen das Unterbaumöbel ab. Dabei ist zweckmäßigerweise die horizontale Länge der seitlichen Schürzenabschnitte derart bemessen, dass sie vor der Vorderwand enden. Das heißt, sie erstrecken sich, gesehen in einer Seitenansicht der Spüle, nicht bis zur Vorderwand hin, diese liegt also in der Montagestellung beabstandet zu den Kanten der Schürzenabschnitte, die wie beschrieben beispielsweise an entsprechenden Vertikalkanten eines Unterbaumöbels oder dergleichen anliegen. Alternativ können sich die Schürzenabschnitte auch bis zur Vorderwand erstrecken, wenn der zu überbrückende Spalt zum Unterbaumöbel entsprechend groß ist.

Erfindungsgemäß ist vorgesehen, dass sich die Schürze, zumindest abschnittsweise, in ihrer Dicke zu ihrem Ende hin verjüngt. Das heißt, dass die Schürze, egal ob die Schürze nur längs der vorderwandseitigen Randabschnittskante verläuft, oder sich mit den Schürzenabschnitten noch ums Eck zieht, keine gleichbleibende Dicke vom oberen bis zum unteren Ende aufweist, sondern sich von oben nach unten verschmälert, also dünner wird.

Während wie beschrieben die Schürzenaußenseite rechtwinklig zur Randabschnittsaußenseite verläuft, und in der Montagestellung demzufolge vertikal verläuft, verläuft die in der Montagestellung nicht sichtbare Innenseitenfläche der Schürze unter einem entsprechend kleinen Winkel zur Vertikalen, mithin also nicht parallel zur Schürzenaußenseite bzw. Außenfläche.

Bevorzugt verjüngt sich dabei die Schürze über ihre gesamte Höhe in ihrer Dicke, d. h. dass die gesamte Innenseitenfläche unter einem Winkel zur Außenseitenfläche der Schürze verläuft, also nicht parallel verläuft. Diese Ausgestaltung ist insbesondere in Bezug auf die Entformbarkeit der Gussspüle aus der Gießform von Vorteil, als aufgrund des dann gegebenen Winkels zwischen der Schürzenaußenseite und der Schürzeninnenseite die entsprechenden Formelemente, die den zwischen der Schürze und der Vorderwand gegebenen Schürzenhohlraum definieren, problemlos entfernt werden können.

Dabei ist es denkbar, dass sich der mittlere Schürzenabschnitt, also der Abschnitt, der entlang des vorderwandseitigen Randabschnitts verläuft, sich stärker als die beiden seitlichen Schürzenabschnitte verjüngt. Das heißt, dass sich die beiden seitlichen Schürzenabschnitte nicht zwingend im selben Winkel wie der mittlere Schürzenabschnitt verjüngen müssen. Da die beiden seitlichen Schürzenabschnitte horizontal gesehen nur sehr kurz sind, ist die Entformbarkeit in diesem Bereich weniger problematisch als im langen, mittleren Schürzenbereich, der sich über die gesamte Spülenlänge erstreckt. Daneben besteht die Alternative, dass sich alle Schürzenabschnitte gleichartig verjüngen.

Grundsätzlich sollte sich die Dicke der Schürze stetig mit einem Winkel zwischen 0,1 - 1,5° verjüngen. Dieser Winkel bezieht sich auf die Schürze selbst und gibt an, wie die Innenfläche der Schürze zur Außenfläche der Schürze verläuft. Diese stehen also nicht parallel, sondern unter einem Winkel zwischen 0,1 - 1,5° zueinander.

Ist sowohl ein mittlerer Schürzenbereich als auch zwei seitliche Schürzenabschnitte vorgesehen, sollte sich der mittlere Schürzenbereich mit einem Winkel zwischen 0,5° - 1,5°, vorzugsweise zwischen 0,7° - 1,3°, und insbesondere mit einem Winkel von 1,0° verjüngen. Die seitlichen Schürzenabschnitte sollten sich zweckmäßigerweise mit einem Winkel zwischen 0,1° - 1,0°, vorzugsweise zwischen 0,2° - 0,5° und insbesondere mit einem Winkel von 0,2° verjüngen. Wenngleich ganz offensichtlich nur sehr kleine Winkel gegeben sind, sind diese für eine gute Entformung bereits ausreichend.

Wie beschrieben handelt es sich bei der erfindungsgemäßen Spüle um einen aus einer Gießmasse hergestellten Gieß- oder Formkörper. Er besteht also aus einem Kompositwerkstoff. Die Gießmasse und damit der ausgehärtete Kompositwerkstoff selbst bestehe aus einem ausgehärteten polymeren Bindemittel und darin eingelagerten Füllstoffen. Als ein solches Bindemittel wird bevorzugt ein Monomer und ein darin gelöstes Polymer verwendet. Insbesondere eignet sich als Monomer ein Methylmethacrylat und als Polymer ein Polymethylmethacrylat, wobei gegebenenfalls zusätzlich ein Vernetzer, insbesondere Trimethylolpropantrimethacrylat vorgesehen werden kann. Beispiele für verwendbare Gießmassen respektive für derartige Kompositwerkstoffe, aus denen eine erfindungsgemäße Spüle hergestellt werden kann, sind beispielsweise in DE 38 32 351 A1 oder DE 10 2004 055 365 A1 offenbart. Dort sind sowohl entsprechende Beispiele für das Bindemittel bestehend aus einer Mischung aus einem Monomer und einem Polymer und gegebenenfalls einem Vernetzer beschrieben, wie auch für verwendbare unterschiedliche Füllstoffpartikel, insbesondere anorganische Füllstoffpartikel unter anderem in Form mineralischer, beschichteter und/oder unbeschichtete Füllstoffpartikel oder deren Mischungen angegeben. Es wird ausdrücklich Bezug auf DE 38 32 351 A1 sowie DE 20 2004 055 365 A1 genommen und deren Offenbarungsgehalt, insbesondere in Bezug auf die dort offenbarten und zur Herstellung der erfindungsgemäßen Spüle verwendbaren Gießmassen respektive die daraus hergestellten Kompositwerkstoffe, explizit in die Offenbarung der vorliegenden Anmeldung aufgenommen.

Eine zweckmäßige Variante der Erfindung sieht in Bezug auf die verwendete Gießmasse und damit die Zusammensetzung des Kompositwerkstoffs vor, dass es eine wärmeaushärtbare biobasierte Gießmasse bzw. ein wärmeausgehärteter Kompositwerkstoff ist, umfassend:
(a) ein oder mehrere mono- und ein oder mehrere polyfunktionelle Acryl- und Methacryl- Bio-Monomere pflanzlichen oder tierischen Ursprungs
(b) ein oder mehrere Polymere oder Copolymere gewählt aus Polyacrylaten, Polymethacrylaten, Polyolen, Polyestern aus recyceltem Material oder pflanzlichen oder tierischen Ursprungs,
(c) anorganische Füllstoffpartikel natürlichen Ursprungs,
wobei der Anteil des oder der mono- und polyfunktionellen Acryl- und Methacryl-Bio-Monomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

Die erfindungsgemäße Gießmasse zeichnet sich dadurch aus, dass die zu einem Großteil, wenn nicht sogar zu 100%, aus biologischen bzw. natürlichen Materialien insbesondere in Bezug auf die verwendeten, sich vernetzenden Stoffe, besteht. So sind erfindungsgemäß die verwendeten mono- und polyfunktionellen Acryl- und Methacryl- Bio-Monomere ausschließlich pflanzlichen oder tierischen Ursprungs. Hier kommen also keine petrochemisch gewonnenen Polymere zum Einsatz. Ein Bio-Monomere ist ein Monomer eines Bio-Polymers. Der Begriff "polyfunktionell" umfasst bi-, tri- und höherfunktionelle Bio-Monomere.

Die verwendeten Polymere oder Copolymere sind vorzugsweise ebenfalls rein pflanzlichen oder tierischen Ursprungs, d.h., dass auch diese Stoffe nicht petrochemischen Ursprungs sind. Hier besteht jedoch alternativ zur Verwendung von Stoffen pflanzlichen/tierischen Ursprungs auch die Möglichkeit, Polymere oder Copolymere aus Recyclingmaterial zu verwenden. Zwar ist dieses Material zumeist petrochemischen Ursprungs, jedoch wird kein Neumaterial verwendet, sondern ein bereits vorhandenes, jedoch recyceltes Material wiederverwendet, was aus Umweltgesichtspunkten ebenfalls vorteilhaft ist. Da die Bio-Monomere neben den verwendeten anorganischen Füllstoffen, die ebenfalls natürlichen Ursprungs sind, den größeren Anteil auf der Polymerseite ausmachen, ist innerhalb der erfindungsgemäßen Gießmasse selbst bei Verwendung von Recyclingmaterial eine Großteil bisheriger verwendeter Stoffe auf petrochemischer Basis durch Bio-Material in Form der Bio-Monomere ersetzt. Bevorzugt natürlich werden auch Polymere bzw. Copolymere rein pflanzlichen oder tierischen Ursprungs verwendet, so dass sich in diesem Falle eine zu 100% auf natürlichen Materialien bestehende Gießmasse ergibt, da wie beschrieben auch die Füllstoffe rein natürlichen Ursprungs sind. Damit handelt es sich bei dem aus der erfindungsgemäßen Gießmasse hergestellten Formkörper folglich um einen Bio-Formkörper, der überwiegend oder vorzugsweise vollständig aus biologischen, also natürlichen Materialien besteht. Die Herstellung des Bio-Verbundwerkstoffe aus den Füllstoffpartikeln und den sich vernetzenden Materialien, die aus erneuerbaren Quellen hergestellt werden, reduziert den Verbrauch der petrochemisch hergestellten Materialien und damit den Erdölverbrauch und wirkt sich positiv auf die Umwelt aus.

Trotz Verwendung von überwiegend oder ausschließlich natürlichen Materialien zur Herstellung der Gießmasse bzw. des Formkörpers, also z.B. einer Küchenspüle, hat sich herausgestellt, dass der Formkörper sehr gute, teilweise sogar noch bessere mechanische Eigenschaften, insbesondere hinsichtlich der Schlagzähigkeit oder der Kratzfestigkeit im Vergleich mit einer bekannten, aus petrochemisch gewonnenen vernetzenden Materialien hergestellten Gießmasse bzw. einem derartigen Formkörper zeigt.

Die Herstellung des Bio-Komposit-Formkörpers in Form der Küchenspüle aus hochwertigen mono- und polyfunktionellen Bio-Acrylat- und Bio-Methacrylatmonomeren ermöglicht es, hohe technische Leistungsanforderungen und einen erhöhten Bio Renewable Carbon Content (BRC) (Anteil an erneuerbarem Kohlenstoff bzw. der biobasierte Kohlenstoffgehalt) in Produkten zu kombinieren. Es gibt eine Vielzahl von verschiedenen bioverfügbaren Quellen zur Herstellung von mono- und polyfunktionellem Bio-Acrylat- und Bio-Methacrylatmonomeren, wie z.B. Pflanzenöl, tierisches Fett, Holz. Ein BRC in Biomonomeren kann bis zu 90 % erreicht werden. Es handelt sich also, da die Gießmasse quasi eine Bio-Gießmasse ist, da sie vorzugsweise sogar zu 100% aus natürlichen, biologischen Stoffen besteht, folglich um eine Bio-Komposit-Küchenspüle.

Der Formkörper aus dem Bio-Kompositmaterial besteht aus der Mischung des anorganischen Füllstoffs, der über einen vernetzenden Polymerisationsprozess der mono- und polyfunktionellen Biomonomere in die Polymermatrix eingebettet ist und durch die Verwendung der nachwachsenden Rohstoffe die große Nachhaltigkeitswirkung erzielt.

Ein Beispiel für eine solche Bio-Gießmasse bzw. ein solches Bio-Kompositmaterial ist in der nachveröffentlichten deutschen Patentanmeldung DE 10 2019 125 777.8 der Anmelderin angegeben, deren Offenbarungsgehalt explizit in die Offenbarung der vorliegenden Anmeldung aufgenommen wird.

Das Gewichtverhältnis von monofunktionellen Biomonomeren zu polyfunktionellen Biomonomeren sollte erfindungsgemäß 2 : 1 bis 80 : 1, vorzugsweise 4 : 1 bis 70 : 1, insbesondere 5 : 1 bis 60 : 1 betragen.

Es kann ein monofunktionelles Biomonomer in Form eines biobasierten Acrylats verwendet werden. Diese kann gewählt werden aus n-Butylacrylat, Methylacrylat, Ethylacrylat, tert.-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy)Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropan-Formalacrylat, ethoxyliertes 4-Laurylacrylat, Polyesteracrylat, Stearylacrylat, hyperverzweigtes Polyesteracrylat, Melaminacrylat, Silikonacrylat, Epoxyacrylat.

Ferner kann ein monofunktionelles Biomonomer in Form eines biobasierten Methacrylats verwendet werden. Dieses kann gewählt werden aus Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

Ein polyfunktionelles Biomonomer kann in Form eines biobasierten Acrylats verwendet werden. Dieses kann gewählt werden aus 1,6 Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, DiPentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxidiertes Sojaöldiacrylat.

Ferner kann ein polyfunktionelles Biomonomer in Form eines biobasierten Methacrylates verwendet werden. Dieses kann gewählt werden aus Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A Dimethacrylat, Trizyclodecandimethanoldimethacrylat, Trimethylolpropantrimethacrylat.

Erfindungsgemäß sollte das Gewichtsverhältnis von mono- oder polyfunktionellen Acrylaten und Methacrylaten zu dem oder den Polymeren oder Copolymeren, insbesondere gewählt aus Polyacrylaten, Polymethacrylaten, Polyolen oder Polyesteren 90:10 bis 60:40, vorzugsweise 85:15 bis 70:30 betragen.

Auch die anorganischen Füllstoffpartikel sind natürlichen, also biologischen Ursprungs und nicht synthetisch hergestellt. Sie können gewählt werden aus SiO2, Al2O3, TiO2, ZrO2, Fe2O3, ZnO, Cr2O5, Kohlenstoff, Metallen oder Metalllegierungen, wobei auch Mischungen zweier oder mehrerer verschiedener Füllstoffpartikelarten verwendet werden können. Das Mischungsverhältnis kann beliebig sein.

Dabei sollten die anorganische Füllstoffpartikel eine Partikelgröße von 0,010 bis 8000 µm, vorzugsweise 0,05 bis 3000 µm, und insbesondere 0,1 bis 1300 µm aufweisen. Ferner sollten die anorganische Füllstoffpartikel ein Seitenverhältnis von 1,0 bis 1000 (Länge : Breite der Einzelpartikel) aufweisen.

Anorganische Füllstoffe können in Form von SiO2 in Form von Quarzpartikeln, Cristobalitteilchen, pyrogenen Kieselsäurepartikeln, belüfteten Kieselsäurepartikeln, Kieselfasern, Kieselsäurefibrillen, Silikatpartikeln, wie Schichtsilikaten; Al2O3-Partikeln, TiO2-Partikeln, Fe2O3-Partikeln, ZnO-Partikeln, Cr2O5-Partikeln, Rußpartikeln, Kohlenstoff Nanoröhren - Partikeln, Graphitpartikeln oder Graphenpartikeln verwendet werden.

Wie bereits beschrieben, hat sich gezeigt, dass die erhaltenen Formkörper trotz Verwendung biobasierter Ausgangsmaterialien, aus denen die Gießmasse besteht, sehr gute Eigenschaften, insbesondere mechanische Eigenschaften aufweisen. Das polymerisierte Bio-Kompositmaterial des Formkörpers sollte eine Schlagfestigkeit von 2 bis 5 mJ/mm² aufweisen, wie es auch eine thermische Stabilität -30 bis 300 °C aufweisen sollte.

Grundsätzlich, unabhängig davon, welche Gießmasse verwendet wird respektive aus welchem Kompositwerkstoff der Gießkörper besteht, sollte der Masseanteil der Füllstoffpartikel bezogen auf die Masse des Gießkörpers zwischen 40 - 85 %, insbesondere zwischen 60 - 80 % und vorzugsweise zwischen 65 - 75 % betragen.

Indem dem die Matrix des Kompositwerkstoffs bildenden Bindemittel sind neben den partikulären Füllstoffen, wie vorstehend beschrieben, keine zusätzlichen Füllstoffe vorgesehen. Dies ist auch nicht erforderlich, als der Kompositwerkstoff bereits ausreichende, hervorragende mechanische Eigenschaften aufweist. Gleichwohl ist es aber denkbar, zusätzlich regellos verteilte Fasern einzubringen, vorzugsweise Polyamidfasern, wobei die Fasern eine Länge von 5 - 20 mm und einen Durchmesser von 0,05 - 0,2 mm aufweisen können und ein Faseranteil von 0,02 - 0,5 wt. % bezogen auf die Gesamtmasse des Gießformkörpers vorgesehen sein kann. Das heißt, dass zusätzlich zu den Füllstoffen auch kurze Fasern beigemengt werden, die zusätzlich die mechanischen Eigenschaften positiv beeinflussen. Bevorzugt kommen PA-Fasern, vorzugsweise PA6 oder PA6.6 zum Einsatz.

Die Fasern sind Kurzfasern, wobei sich eine Länge von 5 - 15 und vorzugsweise von 8 - 12 mm, insbesondere von 10 mm als zweckmäßig erwiesen hat, bei einem bevorzugten Durchmesser von 0,075 - 0,175 mm, insbesondere von 0,1 - 0,15 mm.

Der Anteil der Fasern sollte zweckmäßigerweise 0,025 - 0,25 Gew. %, vorzugsweise 0,03 - 0,2 Gew. % und insbesondere 0,05 - 0,15 Gew. % bezogen auf die Gesamtmasse des Gießformkörpers betragen.

Besonders bevorzugt sind dabei die Fasern im Wesentlichen mit einer ausgezeichneten Ausrichtung, bevorzugt parallel zur Außen- respektive Sichtseite des Gießkörpers, ausgerichtet. Das heißt, dass die Fasern zwar regellos verteilt sind, gleichwohl aber primär unidirektional ausgerichtet sind.

Besonders vorteilhaft ist es, wenn die Fasern derart eingebracht sind, dass ein faserfreier Randbereich anschließend an die jeweilige Außen- oder Sichtfläche im gesamten Beckenbereich, im Rand und an der Schürze gegeben ist, sodass von der Außen- respektive Sichtfläche her keinerlei Fasern zu sehen sind. Die Fasern sind vielmehr zur nicht sichtbaren Innen- oder Unterseite der Spüle hin angeordnet.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Perspektivansicht einer erfindungsgemäßen Spüle,
- Fig. 2: eine Perspektivansicht der Spüle aus Fig. 1 von unten,
- Fig. 3: eine Aufsicht auf die Spüle aus Fig. 1,
- Fig. 4: eine Schnittansicht entlang der Linie IV-IV und Fig. 3,
- Fig. 5: eine Vorderseitenansicht entlang der Linie V-V aus Fig. 3, und
- Fig. 6: eine Perspektivansicht eines Montagebeispiels der erfindungsgemäßen Spüle aus Fig. 1 an einem Unterbaumöbel.

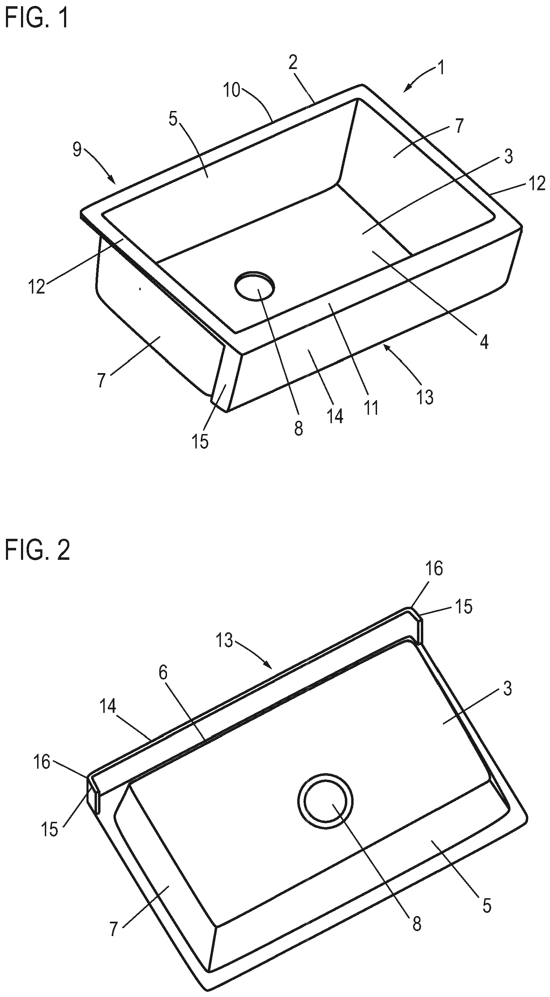

Die Fig. 1 und 2 zeigen einen erfindungsgemäßen Gießformkörper 1 in Form einer Spüle 2 umfassend ein Becken 3 mit einem Boden 4, einer Rückwand 5, einer Vorderwand 6 sowie zwei diese verbindenden Seitenwänden 7, wobei der Boden 4 in an sich bekannter Weise eine Ablauföffnung 8 ausgebildet ist.

Vorgesehen ist es weiterhin ein umlaufender Rand 9 bestehend aus vier sich von den Seitenkanten der Rückwand 5, der Vorderwand 6 und den beiden Seitenwänden 7 erstreckenden, ebenen Randabschnitten 10, 11, 12, die mit ihren in der Montagestellung sichtbaren Außenseiten in der Montagestellung horizontal verlaufen.

Vorgesehen ist des Weiteren eine Schürze 13, die an den Randabschnitt 11 der Vorderwand 6 angeformt ist und die diese höhenmäßig zumindest abschnittsweise, mitunter auch vollständig, übergreift, wie die Fig. 1 und 2 zeigen, nachfolgend aber sich auch aus den anderen Figuren ergibt.

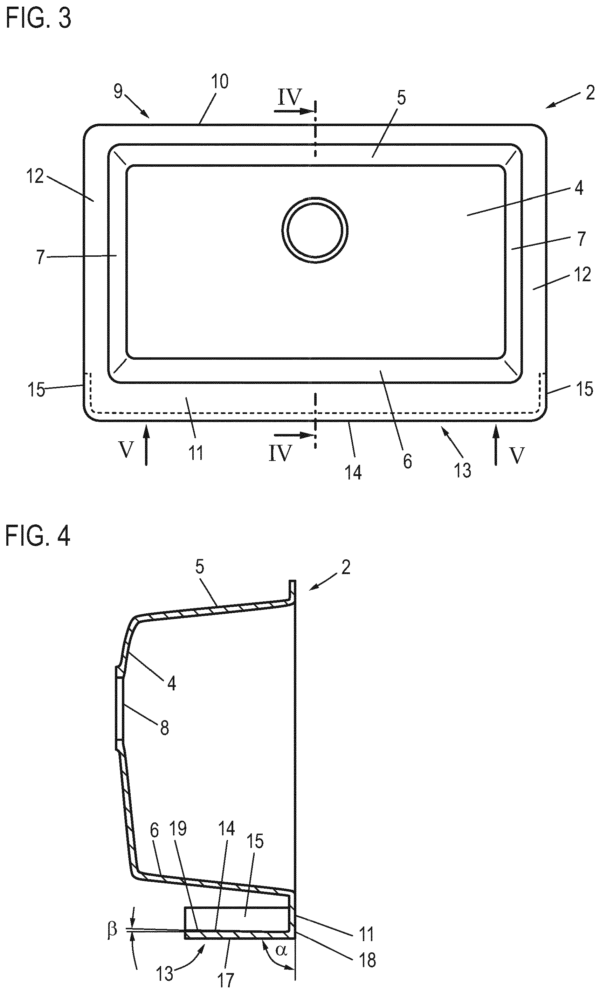

Die Schürze 13 besteht aus einem mittleren Schürzenabschnitt 14, der sich über die gesamte Länge der Vorderwand 6 respektive des Randabschnitts 11 erstreckt. Dieser mittlere Schürzenabschnitt 14 geht gerundet in zwei seitliche Schürzenabschnitte 15 über, wobei auch diese seitlichen Schürzenabschnitte 15 an die benachbarten Randabschnitte 12 der Seitenwände 7 integral angeformt sind. Die konkrete Geometrie wird nachfolgend in Bezug auf die Fig. 3 - 5 im Detail beschrieben.

Die Spüle 2 ist ein Gießkörper aus einem Kompositwerkstoff, mit einem ausgehärteten polymeren Bindemittel, das die eigentliche Matrix bildet, und mit in der Matrix eingelagerten Füllstoffpartikeln. Das Bindemittel umfasst üblicherweise wenigstens ein Monomer sowie wenigstens ein Polymer, wobei unterschiedliche Bindemittelzusammensetzungen denkbar sind. Es wird auf die vorstehenden Ausführungen zu verwendbaren Bindemitteln bzw. Bindemittelzusammensetzungen verwiesen.

Neben verschiedenen Bindemittelansätzen können auch unterschiedliche Füllstoffpartikel eingesetzt werden, die die mechanischen, physikalischen und optischen Eigenschaften der Spüle bestimmen. Diese können aus SiO₂, Al₂O₃, TiO₂, ZrO₂, Fe₂O₃, ZnO, Cr₂O₅, SiC, CaCO₃, Quarzsand, Quarzmehl, Kohlenstoff, Metallen oder Metalllegierungen gewählt sein und Partikelgrößen im Bereich zwischen 0,01 - 8000 µm, vorzugsweise im Bereich von 0,1 - 1300 µm aufweisen. Der Masseanteil der Füllstoffpartikel sollte zwischen 40 - 85 %, insbesondere zwischen 65 - 75 % bezogen auf die Masse des Gießkörpers betragen. Auch hierzu wird auf die vorstehenden Ausführungen zu verwendbaren Füllstoffpartikeln verwiesen.

Das heißt, dass unterschiedliche Ansätze bzw. Mischungen in Bezug auf die Gießmasse respektive den Kompositwerkstoff gegeben sind.

Die Fig. 3 - 5 zeigen den Gießkörper 1 respektive die Spüle 2 in verschiedenen Ansichten.

Fig. 3 zeigt eine Aufsicht auf die Spüle 2, mit Blick auf den Boden 4, wobei auch die leicht nach innen gezogenen Wände, nämlich die Rückwand 5, die Vorderwand 6 sowie die Seitenwände 7 dargestellt sind. Ebenso ist der Rand 9 mit seinen verschiedenen Randabschnitten 10, 11 und 12 gezeigt. Der vordere Randabschnitt 11 ist im gezeigten Beispiel etwas breiter als die anderen Randabschnitte 10, 12, nachdem an ihn, sich vertikal nach unten streckend, die Schürze 13 angeformt ist. Gleichwohl kann die Randbreite trotz angeformter Schürze umlaufend auch gleich sein. Wie beschrieben umfasst diese einerseits den mittleren Schürzenabschnitt 14, andererseits die beiden seitlichen Schürzenabschnitte 15. Diese gehen, wie bereits auf Fig. 2 ersichtlich ist, über eine Rundung 16 in den mittleren Schürzenabschnitt 14 über, d. h., dass die Kante gerundet ist, sodass man sich hieran nicht stoßen kann. Der Radius dieser Rundung 16 liegt im Bereich zwischen 0,5 - 2 cm.

Fig. 4 zeigt eine Schnittansicht durch die Spüle 2, aus der insbesondere die geometrischen Verhältnisse im Bereich der Schürze 13 zu sehen sind.

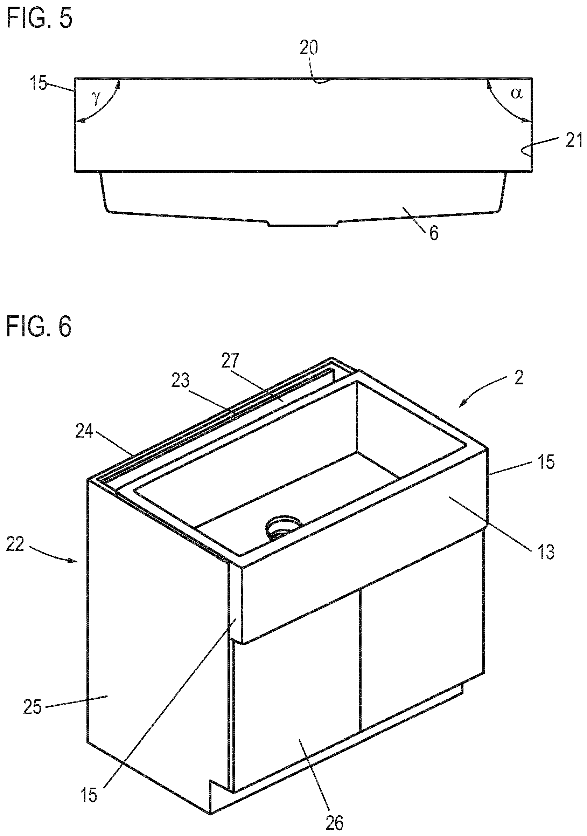

Wie Fig. 4 und insbesondere auch Fig. 5 zeigt, erstreckt sich die Schürze 13 nicht über die gesamte Höhe der Vorderwand 6, sondern im gezeigten Beispiel nur über ca. 2/3 der Höhe, wobei die Höhe des Übergriffs letztlich von der konkreten Verbausituation abhängig ist, nämlich davon, wie die Anschlusssituation der Schürze 13 an ein Unterbaumöbel oder dergleichen ist

Die Schürze 13 respektive sowohl der mittlere Schürzenabschnitt 14 als auch die seitlichen Schürzenabschnitte 15 wiesen eine in der Montagestellung sichtbare Außenseite 17 auf, die unter einem Winkel von 90° zur sichtbaren Außenseite 18 des Randabschnitts 11 steht, wobei dieser Winkel α in Fig. 4 dargestellt ist. Das heißt, dass die beiden Außenseiten 17, 18 bzw. Außenflächen rechtwinklig aufeinander stehen. Dies gilt wie ausgeführt sowohl in Bezug auf den mittleren Schürzenabschnitt 14 als auch die beiden seitlichen Schürzenabschnitte 15.

Die Schürze 13 selbst respektive die Schürzenabschnitte 14, 15 verjüngen sich in ihrer Dicke vom oberen Ende, mit dem sie am Randabschnitt 11 bzw. den Randabschnitten 12 angebunden sind, zu ihrem unteren freien Ende. Der Winkel β, um den die Dicke des mittleren Schürzenabschnitts 14 abnimmt, ist in Fig. 4 ebenfalls dargestellt. Der Winkel γ, um den die Dicke der beiden seitlichen Schürzenabschnitte 15 abnimmt, ist in Fig. 5 gezeigt. Dass heißt, dass die die in der Montagestellung nicht sichtbare Innenfläche 19, 21 der Schürze 13 respektive des jeweiligen Schürzenabschnitts 14, 15 nicht parallel zur sichtbaren Außenfläche 17 verläuft, sondern unter einem Winkel.

Dieser Winkel β, γ liegt grundsätzlich zwischen 0,1 - 1,5°. Am mittleren Schürzenbereich 14 liegt der Winkel β bevorzugt zwischen 0,5° - 1,5°, vorzugsweise zwischen 0,7° - 1,3° und insbesondere bei ca. 1,0°. An den beiden seitigen Schürzenabschnitten 15 liegt dieser Winkel γ zwischen 0,1° - 1,0°, vorzugsweise zwischen 0,2° - 0,5° und insbesondere bei ca. 0,2°. Dieser an den seitlichen Schürzenabschnitten 15 gegebene und in Fig. 5 eingezeichnete Winkel γ definiert den Winkel von der in der Montagestellung nicht sichtbaren Unterseite 20 des Randabschnitts 11 zur nicht sichtbaren Innenseite 21 der beiden seitlichen Schürzenabschnitte 15, und beträgt bei einem Verjüngungswinkel von 0,2° dann 90,2°.

Diese leichte Verschmälerung der Schürze 13 ist für ein erleichtertes Entformen zweckmäßig, wenn also nach dem Aushärten der Gießmasse die Spüle 2 der Gießform entnommen wird.

Wie Fig. 4 zeigt, sind die seitlichen Schürzenabschnitte 15 relativ kurz bemessen, gesehen in der Horizontalen, d. h., sie erstrecken sich nicht bis zur Vorderwand des Beckens 3.

Fig. 6 zeigt ein Montagebeispiel einer erfindungsgemäßen Spüle 2 hier an einem Unterbaumöbel 22, mit einem Möbelkorpus 23 mit einer Rückwand 24, zwei Seitenwänden 25 und einer Vorderwand 26, beispielsweise gebildet über zwei Schwenktüren oder Ähnliches. Ersichtlich ist eine Ausnehmung 27 vorgesehen, in die die Spüle 2 eingesetzt wird. Die Schürze 13 dient als Sichtblende von der Vorderseite her, sie endet unmittelbar oberhalb der Vorderwand 26 des Unterbaumöbels 22. Dem gegenüber liegen die beiden seitlichen Schürzenabschnitte 15 mit ihren beiden vertikal verlaufenden Längskanten an der entsprechenden Vorderkante der jeweiligen Seitenwand 25 bündig an, bilden also einen seitlichen Anschluss der Schürze 13 an das Unterbaumöbel 22 und verblenden einen ansonsten sichtbaren Spalt zwischen dem mittleren Schürzenabschnitt 14 und den Seitenwänden 25. Insgesamt ergibt sich eine ansprechende Einpassung, wobei über die Schürze 13 eine Verblendung gegeben ist.

Im Rahmen der Montage, oder bereits ab Werk, werden die Stirnkanten der beiden Seitenwände 25 des Unterbaumöbels 22, also des Unterschranks, im Auflagebereich der Spüle 2 ca. 8 mm tiefer gefräst, entsprechend der Wanddicke der aufliegenden seitlichen Randabschnitte 12 des Rands der Spüle 2. In diese gefräste Vertiefung wird die Spüle 2 mit ihren Seitenrändern eingesetzt. Die Schürze13 liegt hierbei nicht auf. Abschließend wird die hier nicht gezeigte Arbeitsplatte aufgesetzt, die dann flächig auf den Rändern des Spüle 2 liegt, wonach die Spüle 2 mittels geeigneter Befestigungsmittel wie Unterbauklammern an der Arbeitsplatte befestigt wird.

## Patentansprüche

1. Gießkörper in Form einer Spüle (2) umfassend ein Becken (3) mit einem Boden (4), einer Rückwand (5), einer Vorderwand (6) und zwei diese verbindenden Seitenwänden (7), sowie einem sich zur Seite des Beckens (3) erstreckenden, umlaufenden Rand (9) bestehend aus sich von Seitenkanten der Rückwand (5), der Seitenwände (7) und der Vorderwand (6) geradlinig ersteckenden, ebenen Randabschnitten (10, 11, 12), wobei sich zumindest an den Randabschnitt (11) der Vorderwand (6) eine diese zumindest abschnittsweise in ihrer Höhe übergreifende Schürze (13) anschließt, die sich mit ihrer Außenseite (17) rechtwinklig von der Außenseite (18) des Randabschnitts (11) erstreckt, **dadurch gekennzeichnet, dass** die Spüle (2) aus einem Kompositwerkstoff mit einem ausgehärteten polymeren Bindemittel und darin eingelagerten Füllstoffpartikeln besteht, wobei die Schürze (13) sich geradlinig bis zu ihrem Ende erstreckt und sich zumindest abschnittsweise in ihrer Dicke zu ihrem Ende hin verjüngt.

2. Gießkörper nach Anspruch 1, **dadurch gekennzeichnet, dass** die Schürze (13) aus einem sich entlang der Vorderwand (6) erstreckenden mittleren Schürzenabschnitt (14) und zwei gerundet zu den Randabschnitten (12) der Seitenwände (7) übergehenden, an deren Seitenkanten anschließenden und rechtwinklig zu diesen Randabschnitten (12) stehenden Schürzenabschnitte (15) besteht.

3. Gießkörper nach Anspruch 2, **dadurch gekennzeichnet, dass** die horizontale Länge der seitlichen Schürzenabschnitte (15) derart bemessen ist, dass sie vor der Vorderwand (6) enden.

4. Gießkörper nach einem der vorangehenden Ansprüche, **dadurch gekennzeichnet, dass** sich die Schürze (13) über ihre gesamte Höhe in ihrer Dicke verjüngt.

5. Gießkörper nach einem der vorangehenden Ansprüche, **dadurch gekennzeichnet, dass** sich der mittlere Schürzenabschnitt (14) stärker als die beiden seitlichen Schürzenabschnitte (15) verjüngt, oder dass sich alle Schürzenabschnitte (14, 15) gleichartig verjüngen.

6. Gießkörper nach einem der vorangehenden Ansprüche, **dadurch gekennzeichnet, dass** die Dicke der Schürze (13) sich stetig mit einem Winkel zwischen 0,1° - 1,5° verjüngt.

7. Gießkörper nach Anspruch 5 und 6, **dadurch gekennzeichnet, dass** sich der mittlere Schürzenbereich (14) mit einem Winkel zwischen 0,5° - 1,5°, vorzugsweise zwischen 0,7° - 1,3°, und insbesondere von 1,0° verjüngt.

8. Gießkörper nach Anspruch 5 und 6, oder Anspruch 7, **dadurch gekennzeichnet, dass** sich die seitlichen Schürzenabschnitte (15) mit einem Winkel zwischen 0,1° - 1,0°, vorzugsweise zwischen 0,2° - 0,5 ° und insbesondere 0,2° verjüngen.

9. Gießkörper nach einem der vorangehenden Ansprüche, **dadurch gekennzeichnet, dass** das Bindemittel ein Monomer und ein darin gelöstes Polymer umfasst.

10. Gießkörper nach Anspruch 9, **dadurch gekennzeichnet, dass** das Monomer Methylmethacrylat und das Polymer Polymethylmethacrylat ist.

11. Gießkörper nach einem der vorangehenden Ansprüche, **dadurch gekennzeichnet, dass** das Bindemittel einen Vernetzer, insbesondere Trimethylolpropantrimethacrylat umfasst.

12. Gießkörper nach einem der vorangehenden Ansprüche, **dadurch gekennzeichnet, dass** er zumindest besteht aus:
(a) einen oder mehreren mono- und einem oder mehreren polyfunktionellen Acryl- und/oder Methacryl-Biomonomeren pflanzlichen oder tierischen Ursprungs
(b) einem oder mehreren Polymeren oder Copolymeren gewählt aus Polyacrylaten, Polymethacrylaten, Polyolen, Polyestern aus recyceltem Material oder pflanzlichen oder tierischen Ursprungs,
(c) anorganischen Füllstoffpartikeln natürlichen Ursprungs, wobei der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

13. Gießkörper nach Anspruch 12, wobei das Gewichtverhältnis von monofunktionellen Biomonomeren zu polyfunktionellen Biomonomeren 2 : 1 bis 80 : 1, vorzugsweise 4 : 1 bis 70 : 1, insbesondere 5 : 1 bis 60 : 1 beträgt.

14. Gießkörper nach Anspruch 12 oder 13, wobei das oder die monofunktionellen Biomonomere gewählt sind aus biobasierten Acrylaten, nämlich n-Butylacrylat, Methylacrylat, Ethylacrylat, tert-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy) Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropanformalacrylat, ethoxyliertes 4-Laurylacrylat, Polyesteracrylat, Stearylacrylat hyperverzweigtes Polyesteracrylat, Melaminacrylat, Silikonacrylat, Epoxyacrylat, und aus biobasierten Methacrylaten, nämlich Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

15. Gießkörper nach einem der Ansprüche 12 bis 14, wobei das oder die polyfunktionellen Biomonomere gewählt sind aus biobasierten Acrylaten, nämlich 1,6-Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, DiPentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxydierte Sojaöldiacrylat und aus den biobasierten polyfunktionellen Methacrylaten, nämlich Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A-Dimethacrylat, Trizyclodecandimethanoldimethacrylat, Trimethylolpropantrimethacrylat.

16. Gießkörper nach einem der vorangehenden Ansprüche 12 bis 15, wobei das Gewichtsverhältnis von mono- und polyfunktionellen Acrylaten und Methacrylaten zu dem oder den Polymeren oder Copolymeren 90:10 bis 60:40, vorzugsweise 85:15 bis 70:30 beträgt.

17. Gießkörper nach einem der vorangehenden Ansprüche, wobei die anorganische Füllstoffpartikel gewählt sind aus SiO₂, Al₂O₃, TiO₂, ZrO₂, Fe₂O₃, ZnO, Cr₂O₅, SiC, CaCO₃, Quarzsand, Quarzmehl, Kohlenstoff, Metallen oder Metalllegierungen.

18. Gießkörper nach einem der vorangehenden Ansprüche, wobei die anorganischen Füllstoffpartikel eine Partikelgröße von 0,010 bis 8000 µm, vorzugsweise 0,05 bis 3000 µm, und insbesondere 0,1 bis 1300 µm aufweisen.

19. Gießkörper nach einem der vorangehenden Ansprüche, wobei die anorganische Füllstoffpartikel ein Seitenverhältnis von Länge zu Breite von 1,0 bis 1000 (Länge : Breite der Einzelpartikel) aufweisen.

20. Gießkörper nach einem der vorangehenden Ansprüche, **dadurch gekennzeichnet, dass** der Masseanteil der Füllstoffpartikel (7) bezogen auf die Masse des Gießkörpers (1) zwischen 40 - 85%, insbesondere zwischen 60 - 80 %, vorzugsweise zwischen 65 - 75% beträgt.

## Claims

1. Casting in the form of a sink (2), comprising a basin (3) having a base (4), a rear wall (5), a front wall (6) and two interconnecting side walls (7), and also a circumferential rim (9) that extends to the side of the basin (3) and consists of flat rim sections (10, 11, 12) that extend in a straight line from lateral edges of the rear wall (5), the side walls (7) and the front wall (6), where a skirt (13) that surpasses the height of the front wall (6) at least in sections adjoins at least the rim section (11) of the front wall (6), and its outer face (17) extends at right angles from the outer face (18) of the rim section (11), **characterized in that** the sink (2) consists of a composite material comprising a cured polymeric binder and filler particles intercalated therein, where the skirt (13) extends in a straight line to its end and, at least in sections, narrows in thickness towards its end.

2. Casting according to Claim 1, **characterized in that** the skirt (13) consists of a middle skirt section (14) that extends along the front wall (6) and two skirt sections (15) that merge into the rim sections (12) of the side walls (7) in a rounded manner, adjoin the lateral edges thereof and are at right angles to these rim sections (12).

3. Casting according to Claim 2, **characterized in that** the horizontal length of the lateral skirt sections (15) is such that they end before the front wall (6).

4. Casting according to any of the preceding claims, **characterized in that** the skirt (13) narrows in thickness over its entire height.

5. Casting according to any of the preceding claims, **characterized in that** the middle skirt section (14) narrows more significantly than the two lateral skirt sections (15), or **in that** all skirt sections (14, 15) narrow in an equivalent manner.

6. Casting according to any of the preceding claims, **characterized in that** the thickness of the skirt (13) narrows constantly at an angle between 0.1°-1.5°.

7. Casting according to Claim 5 or 6, **characterized in that** the middle skirt region (14) narrows at an angle between 0.5°-1.5°, preferably between 0.7°-1.3°, and especially of 1.0°.

8. Casting according to Claims 5 and 6, or Claim 7, **characterized in that** the lateral skirt sections (15) narrow at an angle between 0.1°-1.0°, preferably between 0.2°-0.5°, and especially of 0.2°.

9. Casting according to any of the preceding claims, **characterized in that** the binder comprises a monomer and a polymer dissolved therein.

10. Casting according to Claim 9, **characterized in that** the monomer is methyl methacrylate and the polymer is polymethylmethacrylate.

11. Casting according to any of the preceding claims, **characterized in that** the binder comprises a crosslinker, especially trimethylolpropane trimethacrylate.

12. Casting according to any of the preceding claims, **characterized in that** it at least consists of:
(a) one or more mono- and one or more polyfunctional acrylic and/or methacrylic biomonomers of vegetable or animal origin,
(b) one or more polymers or copolymers selected from polyacrylates, polymethacrylates, polyols, polyesters made from recycled material or of vegetable or animal origin,
(c) inorganic filler particles of natural origin,
wherein the proportion of the mono- and polyfunctional acrylic and methacrylic biomonomer(s) is 10-40% by weight, the proportion of the polymer(s) or copolymer(s) is 1-16% by weight and the proportion of the inorganic filler particles is 44-89% by weight.

13. Casting according to Claim 12, wherein the weight ratio of monofunctional biomonomers to polyfunctional biomonomers is 2:1 to 80:1, preferably 4:1 to 70:1, especially 5:1 to 60:1.

14. Casting according to Claim 12 or 13, wherein the monofunctional biomonomer(s) is/are selected from biobased acrylates, namely n-butyl acrylate, methyl acrylate, ethyl acrylate, tert-butyl acrylate, isobutyl acrylate, isodecyl acrylate, dihydrodicyclopentadienyl acrylate, ethyldiglycol acrylate, heptadecyl acrylate, 4-hydroxybutyl acrylate, 2-hydroxyethyl acrylate, hydroxyethylcaprolactone acrylate, polycaprolactone acrylate, hydroxypropyl acrylate, lauryl acrylate, stearyl acrylate, tert-butyl acrylate, 2-(2-ethoxy)ethyl acrylate, tetrahydrofurfuryl acrylate, 2-phenoxyethyl acrylate, ethoxylated 4-phenyl acrylate, trimethylcyclohexyl acrylate, octyldecyl acrylate, tridecyl acrylate, ethoxylated 4-nonylphenolacrylate, isobornyl acrylate, cyclic trimethylolpropane formal acrylate, ethoxylated 4-lauryl acrylate, polyester acrylate, stearyl acrylate, hyperbranched polyester acrylate, melamine acrylate, silicone acrylate, epoxy acrylate, and from biobased methacrylates, namely methyl methacrylate, ethyl methacrylate, n-butyl methacrylate, isobutyl methacrylate, tert-butyl methacrylate, behenyl methacrylate, phenyl polyethylene glycol methacrylate, cyclohexyl methacrylate, isodecyl methacrylate, 2-ethylhexyl methacrylate, lauryl methacrylate, stearyl methacrylate, stearyl polyethylene glycol methacrylate, isotridecyl methacrylate, ureido methacrylate, tetrahydrofurfuryl methacrylate, phenoxyethyl methacrylate, 3,3,5-trimethylcyclohexanol methacrylate, isobornyl methacrylate, methoxy polyethylene glycol methacrylate, glycidyl methacrylate, hexylethyl methacrylate, glycerol formal methacrylate, lauryltetradecyl methacrylate, C17,4 methacrylate.

15. Casting according to any of Claims 12 to 14, wherein the polyfunctional biomonomer(s) is/are selected from biobased acrylates, namely hexanediol 1,6-diacrylate, polyethylene glycol diacrylate, tetraethylene glycol diacrylate, tripropylene glycol diacrylate, polybutadiene diacrylate, 3-methylpentane-1,5-diol diacrylate, ethoxylated bisphenol A diacrylate, dipropylene glycol diacrylate, ethoxylated hexanediol diacrylate, decane-1,10-diol diacrylate, esterdiol diacrylate, alkoxylated diacrylate, tricyclodecanedimethanol diacrylate, propoxylated neopentyl glycol diacrylate, pentaerythritol tetraacrylate, trimethylolpropane triacrylate, ditrimethylolpropane tetraacrylate, tris(2-hydroxyethyl)isocyanurate triacrylate, dipentaerythritol pentaacrylate, ethoxylated trimethylolpropane triacrylate, pentaerythritol triacrylate, propoxylated trimethylolpropane triacrylate, ethoxylated pentaerythritol tetraacrylate, propoxylated glyceryl triacrylate, aliphatic urethane diacrylate, aliphatic urethane hexaacrylate, aliphatic urethane triacrylate, aromatic urethane diacrylate, aromatic urethane triacrylate, aromatic urethane hexaacrylate, polyester hexaacrylate, epoxidized soya oil diacrylate, and from the biobased polyfunctional methacrylates, namely triethylene glycol dimethacrylate, ethylene glycol dimethacrylate, polyethylene glycol dimethacrylate, butane-1,4-diol dimethacrylate, diethylene glycol dimethacrylate, hexane-1,6-diol dimethacrylate, decane-1,10-diol dimethacrylate, 1,3-butylene glycol dimethacrylate, ethoxylated bisphenol A dimethacrylate, tricyclodecanedimethanol dimethacrylate, trimethylolpropane trimethacrylate.

16. Casting according to any of the preceding Claims 12 to 15, wherein the weight ratio of mono- and polyfunctional acrylates and methacrylates to the polymer(s) or copolymer(s) is 90:10 to 60:40, preferably 85:15 to 70:30.

17. Casting according to any of the preceding claims, wherein the inorganic filler particles are selected from SiO₂, Al₂O₃, TiO₂, ZrO₂, Fe₂O₃, ZnO, Cr₂O₅, SiC, CaCO₃, quartz sand, quartz flour, carbon, metals or metal alloys.

18. Casting according to any of the preceding claims, wherein the inorganic filler particles have a particle size of 0.010 to 8000 µm, preferably 0.05 to 3000 µm, and especially 0.1 to 1300 µm.

19. Casting according to any of the preceding claims, wherein the inorganic filler particles have a side ratio of length to width of 1.0 to 1000 (length:width of the individual particles).

20. Casting according to any of the preceding claims, **characterized in that** the proportion by mass of the filler particles (7) based on the mass of the casting (1) is between 40-85%, especially between 60-80%, preferably between 65-75%.

## Revendications

1. Corps coulé sous la forme d'un évier (2) comprenant un bassin (3) présentant un fond (4), une paroi arrière (5), une paroi avant (6) et deux parois latérales (7) les reliant, ainsi qu'un rebord (9) périphérique s'étendant sur le côté du bassin (3), constitué par des sections (10, 11, 12) de rebord plates s'étendant de manière linéaire à partir des bords latéraux de la paroi arrière (5), des parois latérales (7) et de la paroi avant (6), un tablier (13) se raccordant au moins à la section (11) de rebord de la paroi avant (6) et s'étendant sur celle-ci au moins par sections sur sa hauteur, lequel tablier s'étend avec sa face externe (17) à angle droit à partir de la face externe (18) de la section (11) de rebord, **caractérisé en ce que** l'évier (2) est constitué par un matériau composite présentant un liant polymère durci et des particules de charge qui y sont incorporées, le tablier (13) s'étendant de manière linéaire jusqu'à son extrémité et son épaisseur s'amincissant au moins par sections jusqu'à son extrémité.

2. Corps coulé selon la revendication 1, **caractérisé en ce que** le tablier (13) est constitué d'une section centrale (14) de tablier, s'étendant le long de la paroi avant (6) et de deux sections (15) de tablier qui se transforment de manière arrondie en sections (12) de rebord des parois latérales (7), se raccordant à leurs bords latéraux et perpendiculaires à ces sections (12) de rebord.

3. Corps coulé selon la revendication 2, **caractérisé en ce que** la longueur horizontale des sections latérales (15) de tablier est dimensionnée de telle sorte qu'elles se terminent devant la paroi avant (6).

4. Corps coulé selon l'une des revendications précédentes, **caractérisé en ce que** l'épaisseur du tablier (13) s'amincit sur toute sa hauteur.

5. Corps coulé selon l'une des revendications précédentes, **caractérisé en ce que** la section centrale (14) de tablier s'amincit de manière plus importante que les deux sections latérales (15) de tablier ou **en ce que** toutes les sections (14, 15) de tablier s'amincissent de la même manière.

6. Corps coulé selon l'une des revendications précédentes, **caractérisé en ce que** l'épaisseur du tablier (13) s'amincit en continu selon un angle entre 0,1° - 1,5°.

7. Corps coulé selon la revendication 5 et 6, **caractérisé en ce que** la zone centrale (14) de tablier s'amincit selon un angle entre 0,5° - 1,5°, de préférence entre 0,7° - 1,3° et en particulier de 1,0°.

8. Corps coulé selon la revendication 5 et 6 ou la revendication 7, **caractérisé en ce que** les zones latérales (15) de tablier s'amincissent selon un angle entre 0,1° - 1,0°, de préférence entre 0,2° - 0,5° et en particulier de 0,2°.

9. Corps coulé selon l'une des revendications précédentes, **caractérisé en ce que** le liant comprend un monomère et un polymère qui y est dissous.

10. Corps coulé selon la revendication 9, **caractérisé en ce que** le monomère est le méthacrylate de méthyle et le polymère est le poly(méthacrylate de méthyle).

11. Corps coulé selon l'une des revendications précédentes, **caractérisé en ce que** le liant comprend un réticulant, en particulier du triméthacrylate de triméthylolpropane.

12. Corps coulé selon l'une des revendications précédentes, **caractérisé en ce qu'**il est au moins constitué de :
(a) un ou plusieurs biomonomères d'acryle et/ou de méthacryle monofonctionnels et un ou plusieurs biomonomères d'acryle et/ou de méthacryle polyfonctionnels d'origine végétale ou animale
(b) un ou plusieurs polymères ou copolymères choisis parmi les polyacrylates, les polyméthacrylates, les polyols, les polyesters en matériaux recyclés ou d'origine végétale ou animale,
(c) des particules de charge inorganiques d'origine naturelle,
la proportion du ou des biomonomères d'acryle et de méthacryle monofonctionnels et polyfonctionnels représentant 10 à 40% en poids, la proportion du ou des polymères ou copolymères représentant 1 à 16% en poids et la proportion des particules de charge inorganiques représentant 44 à 89% en poids.

13. Corps coulé selon la revendication 12, le rapport en poids des biomonomères monofonctionnels aux biomonomères polyfonctionnels valant 2:1 à 80:1, de préférence 4:1 à 70:1, en particulier 5:1 à 60:1.

14. Corps coulé selon la revendication 12 ou 13, le ou les biomonomères monofonctionnels étant choisis parmi les acrylates biosourcés, à savoir l'acrylate de n-butyle, l'acrylate de méthyle, l'acrylate d'éthyle, l'acrylate de tert-butyle, l'acrylate d'isobutyle, l'acrylate d'isodécyle, l'acrylate de dihydrodicyclopentadiényle, l'acrylate d'éthyldiglycol, l'acrylate d'heptadécyle, l'acrylate de 4-hydroxybutyle, l'acrylate de 2-hydroxyéthyle, l'acrylate d'hydroxyéthylcaprolactone, l'acrylate de polycaprolactone, l'acrylate d'hydroxypropyle, l'acrylate de lauryle, l'acrylate de stéaryle, l'acrylate de tert-butyle, l'acrylate de 2(2-éthoxy)éthyle, l'acrylate de tétrahydrofurfuryle, l'acrylate de 2-phénoxyéthyle, l'acrylate de 4-phényle éthoxylé, l'acrylate de triméthylcyclohexyle, l'acrylate d'octyldécyle, l'acrylate de tridécyle, l'acrylate de 4-nonylphénol éthoxylé, l'acrylate d'isobornyle, l'acrylate de formaldéhyde de triméthylolpropane cyclique, l'acrylate de 4-lauryle éthoxylé, l'acrylate de polyester, l'acrylate de stéaryle, le polyesteracrylate hyperramifié, l'acrylate de mélamine, l'acrylate de silicone, l'époxyacrylate et les méthacrylates biosourcés, à savoir le méthacrylate de méthyle, le méthacrylate d'éthyle, le méthacrylate de n-butyle, le méthacrylate d'isobutyle, le méthacrylate de tert-butyle, le méthacrylate de béhényle, le méthacrylate de phénylpolyéthylèneglycol, le méthacrylate de cyclohexyle, le méthacrylate d'isodécyle, le méthacrylate de 2-éthylhexyle, le méthacrylate de lauryle, le méthacrylate de stéaryle, le méthacrylate de stéarylpolyéthylèneglycol, le méthacrylate d'isotridécyle, l'uréidométhacrylate, le méthacrylate de tétrahydrofurfuryle, le méthacrylate de phénoxyéthyle, le méthacrylate de 3,3,5-triméthylcyclohexanol, le méthacrylate d'isobornyle, le méthacrylate de méthoxypolyéthylèneglycol, le méthacrylate de glycidyle, le méthacrylate d'hexyléthyle, le méthacrylate de formaldéhyde de glycérol, le méthacrylate de lauryltétradécyle, le C17,4-méthacrylate.

15. Corps coulé selon l'une des revendications 12 à 14, le ou les biomonomères polyfonctionnels étant choisis parmi les acrylates biosourcés, à savoir le diacrylate de 1,6-hexanediol, le diacrylate de polyéthylèneglycol, le diacrylate de tétraéthylèneglycol, le diacrylate de tripropylèneglycol, le diacrylate de polybutadiène, le diacrylate de 3-méthyl-1,5-pentanediol, le diacrylate de bisphénol A éthoxylé, le diacrylate de dipropylèneglycol, le diacrylate d'hexanediol éthoxylé, le diacrylate de 1,10-décanediol, le diacrylate d'esterdiol, le diacrylate alcoxylé, le diacrylate de tricyclodécanediméthanol, le diacrylate de néopentylglycol propoxylé, le tétraacrylate de pentaérythritol, le triacrylate de triméthylolpropane, le tétraacrylate de di-triméthylolpropane, le triacrylate de tris(2-hydroxyéthyl)isocyanurate, le pentaacrylate de di-pentaérythritol, le triacrylate de triméthylolpropane éthoxylé, le triacrylate de pentaérythritol, le triacrylate de triméthylolpropane propoxylé, le tétraacrylate de pentaérythritol éthoxylé, le triacrylate de glycéryle propoxylé, le diacrylate d'uréthane aliphatique, l'hexaacrylate d'uréthane aliphatique, le triacrylate d'uréthane aliphatique, le diacrylate d'uréthane aromatique, le triacrylate d'uréthane aromatique, l'hexaacrylate d'uréthane aromatique, l'hexaacrylate de polyester, le diacrylate d'huile de soja époxydé et les méthacrylates polyfonctionnels biosourcés, à savoir le diméthacrylate de triéthylèneglycol, le diméthacrylate d'éthylèneglycol, le diméthacrylate de polyéthylèneglycol, le diméthacrylate de 1,4-butanediol, le diméthacrylate de diéthylèneglycol, le diméthacrylate de 1,6-hexanediol, le diméthacrylate de 1,10-décanediol, le diméthacrylate 1,3-butylèneglycol, le diméthacrylate de bisphénol A éthoxylé, le diméthacrylate de tricyclodécanediméthanol, le triméthacrylate de triméthylolpropane.

16. Corps coulé selon l'une des revendications précédentes 12 à 15, le rapport en poids des acrylates et méthacrylates monofonctionnels et polyfonctionnels aux polymères ou copolymères valant 90:10 à 60:40, de préférence 85:15 à 70:30.

17. Corps coulé selon l'une des revendications précédentes, les particules de charge inorganiques étant choisies parmi SiO₂, Al₂O₃, TiO₂, ZrO₂, Fe₂O₃, ZnO, Cr₂O₅, SiC, CaCO₃, le sable de quartz, la farine de quartz, le carbone, les métaux ou les alliages métalliques.

18. Corps coulé selon l'une des revendications précédentes, les particules de charge inorganiques présentant une grosseur de particule de 0,010 à 8000 µm, de préférence de 0,05 à 3000 µm et en particulier de 0,1 à 1300 µm.

19. Corps coulé selon l'une des revendications précédentes, les particules de charge inorganiques présentant un rapport d'aspect de longueur à largeur de 1,0 à 1000 (longueur:largeur des particules individuelles).

20. Corps coulé selon l'une des revendications précédentes, **caractérisé en ce que** la proportion massique des particules de charge (7), par rapport à la masse du corps coulé (1), vaut entre 40 - 85%, en particulier entre 60 - 80%, de préférence entre 65 - 75%.
